# EUROPEAN PATENT SPECIFICATION

(11) **EP 1 491 659 B1**
(45) Date of publication and mention of the grant of the patent: **07.06.2006**
(21) Application number: 03405465.0
(22) Date of filing: 26.06.2003
(51) Int. Cl.: C23C 28/00, C23C 28/02, F01D 5/28, C23C 4/02

(54) **A method of depositing a coating system**
Verfahren für das Auftragen eines mehrschichtigen Systems
Méthode d'application d'un système de couches

(43) Date of publication of application: 29.12.2004
(73) Proprietor: Alstom Technology Ltd, 5400 Baden (CH)
(72) Inventor: Khan, Abdus Suttar, Dr., 5408 Ennetbaden (CH); Duda, Thomas, Dr., 5415 Nussbaumen (CH); Schnell, Alexander, 5408 Ennetbaden (CH)

(56) References cited:
- EP-A- 0 386 386
- EP-A- 1 111 091
- US-A- 4 973 445
- US-A- 5 650 235
- US-A- 5 824 205

## Description

### FIELD OF INVENTION

The invention relates to a method of depositing a coating system on the external surface of an article according to claim 1.

### STATE OF THE ART

Components designed for the use in the area of high temperature, e.g. blades or vanes of a gas turbine, are usually coated with environmentally resistant coatings. The coating protects the base material against corrosion and oxidation due to the thermal effect of the hot environment. Most turbine components are coated for the protection from oxidation and/or corrosion with, for example, a MCrAIY coating (base coat) and some are also coated with a Thermal Barrier Coating (TBC) for thermal insulation.

MCrAlY protective overlay coatings are widely known in the prior art. They are a family of high temperature coatings, wherein M is selected from one or a combination of iron, nickel and cobalt. As an example US-A-3,528,861 or US-A-4,585,481 are disclosing such kind of oxidation resistant coatings.

There are two types of MCrAIY based on composition and microstructure: γ/γ' and γ/β. The field of γ/β-coatings have been an active area of research and a series of patents has been issued. E.g. a NiCrAIY coating is described in US-A-3,754,903 and a CoCrAIY coating in US-A-3,676,058 while US-A-4,346,137 discloses an improved high temperature fatigue resistance NiCoCrAlY coating. US-A-4,419,416, US-A-4,585,481, RE-32,121 and US-A-A-4,743,514 describe MCrAlY coatings containing Si and Hf. US-A-4,313,760 discloses a superalloy coating composition with good oxidation, corrosion and fatigue resistance. Further examples of development of oxidation resistant MCrAlY coatings are cited here: US-A-5,035,958, US-A-5,154,885, US-A-5, 455,119, US-A-6,280,857, US-A-6, 207,297 and US-A-6, 221,181.

In contrast to the γ/β-coatings, the γ/γ'-type of MCrAlY coatings, known e.g. from US-A-4,973,445, are relatively new. The unique feature of this type of γ/γ'-coatings is that their thermal expansion mismatch is close to zero in combination with a high ductility, what make these coatings more resistant to thermal fatigue. However the limitations are the low aluminum content and hence their low reservoir of aluminum.

The field of γ/γ'-type of MCrAIY coatings, known e.g. from US-A-4,973,445, are limited. The interesting feature of this type of coatings is that they have low thermal expansion coefficient and a high ductility that make these coatings more resistant to thermal fatigue. However the limitation of these coating is their low aluminum content. Due to repeated spalling of oxides during thermal cycling the γ/γ'-coating is unable to sustain the alumina growth.

The development in 1980's in MCrAlY was primarily focused towards improving the oxidation resistance of MCrAlY via, for example, by over aluminising. The approach consists of deposition of MCrAlY by plasma spraying i.e. APS, VPS, LPPS, and HVOF or by EB-PVD and then enriching the surface of MCrAIY by aluminising. For example, US-A-3,873,347 and US-A-4,080,486 deposited MCrAlY to a thickness in the range from 75 to 125 µm by EB-PVD and aluminised the MCrAIY to a thickness of 25 to 50 µm. While US-A-4,005,989, first aluminized the substrate followed by MCrAIY deposition. The MCrAIY coating thickness in this case was from 25 to 125 µm while the aluminide layer thickness ranged from 25 to 62 µm. The Al content in the aluminide was in the range from 22 to 36 percent.

In yet another patent, US-A-4,910,092, deposited first a MCrAIY coatings by plasma spraying and then over aluminised it by a pack process. The thickness of the MCrAlY coating ranged approximately from 12 to 75 µm while the aluminised thickness ranged from 25 to 100 µm. The coating system exhibited improved oxidation resistance and thermal fatigue resistance. The aluminised layer had aluminum content in the range from 21 to 35 percent.

US-A-6,129,991 used a Chemical Vapor Deposition (CVD) method to aluminize the MCrAlY surface, the CVD process forms aluminide coatings free of P and S contamination known to adversely affect the oxidation resistance of coatings. The aluminide coating containing Hf, Zr and Si was also deposited by CVD. The thickness of the aluminide overcoat was from 12 to 100 µm.

There are also references in the literature in improving the fatigue resistance of coatings. The approach consists of modifying the composition of coatings to reduce the thermal expansion mismatch between the coating and the substrate. For example, US-A-4,758,480 developed coatings by modifying the composition of the superalloy substrate. The coatings had thermal expansion coefficient close to the substrate, hence had a low thermal expansion mismatch and showed a higher fatigue resistance compared to a typical MCrAIY coating. In a separate patent, US-A-4, 346,137, Pt and/or Rh were added to MCrAlY to reduce the thermal expansion of the coatings and the modified coatings showed higher fatigue resistance.

Reducing the thermal expansion mismatch between the coating and the substrate had a beneficial effect in improving the fatigue resistance of coatings; yet there is another approach to further enhance the fatigue resistance - this is by using a relatively thin coating. For example, in industrial gas turbine engines where the components are expected to run thousands of hours, the coating thickness used is generally in the range of 350 to 650 µm in contrast to 100 to 200 µm coatings for aircraft turbine blades and vanes. A lower coating thickness in industrial gas turbine blades and vanes will provide a benefit towards a fatigue life. However, one would like to have a process with no line of sight with good control in coating thickness and is able to coat leading edge and airfoil transition areas uniformly. Furthermore, coatings should not be contaminated by excess of oxygen known to adversely affect the fatigue life.

Unlike plasma spray, the electroplating process has a good coating thickness control and has no line of sight limitation. In a series of patents, US-A-5, 558,758, US-A-5, 824,205 and US-A-5,833,829 described the deposition of MCrAIY coatings by electroplated process. The process consists of depositing coatings via a precursor, i.e. CrAlM2 powder in a M1 bath where M2 is one or more of Si, Ti, Hf, Ga, Nb, Mn, Pt and rare earth elements and M1 consists of Ni, Co, Fe alone or in combination. The as-deposited coating is heat-treated to obtain the desired coating structure. Since there is no line of sight limitation a complex contoured surface can be also coated by the electroplated process with good thickness control. However coating by electroplated process appears to be sensitive to composition i.e. not all coatings compositions can be applied effectively by the process.

The reference is made here of electroplated MCrAIY coatings developed by applicant; the patent application on the subject of plated MCrAIY coatings is filed with an application with the application number EP02405881.0.

### SUMMARY OF THE INVENTION

It is object of the present invention to describe a method of depositing a coating resisting cracking during thermal cycling prevalent in the engine with a good corrosion property.

According to the present invention a method was found, comprising the steps of depositing at least a layer of MCrAlY or MCrAlSiY on the substrate followed by deposition of multiple layers of MCrAlY, MCrAlSi or MCrSi, wherein at least the outer layer on top of all deposited layers consisting of MCrAlSi or MCrSi is deposited by an electroplated method.

The present coating consists of an array of layers suitable arranged to reduce diffusion flux as well as to provide sufficient amount of aluminum and chromium on the surface to provide both oxidation and corrosion resistance at the operating temperature in the engine. The present coating forms during operation chromia and or mixed scale containing chromia, alumina and silica.

The present disclosure of the invention consists of providing multiple interfaces in overlay or bond coating in order to reduce crack initiation and propagation. The interface in the structure provides hindrance to crack initiation and propagation, since cracks must re-initiate at the interface and then propagate through the coatings. In the disclosed invention the coating layers are suitably disposed in preference to chemical composition, modulas, thermal expansion coefficient, i.e. physical-mechanical and metallurgical properties. The layer spacing in the disclosed is contemplated as tens of micros and will be based on coating chemical activity and diffusional stability.

As an example, the coating could consists of alternating layers of two different materials, such as one layer consists of MCrAIY and the other layer consists of MCrAlSiY. The density of layers in mid section of all layer can be higher than in the interior or external areas of the coating layer.

Before the deposition of the coating layers the external surface of the article and/or the outer layer of the deposited layers can be aluminised.

The deposition of the coating-layers can be followed by a heat treatment of 1100ºC for 2 to 20 hours, e.g. at 1140ºC for 2 hours, in an inert atmosphere, such as argon, air, hydrogen or in a vacuum.

On top of the applied layers a layer of a ceramic thermal barrier coating (TBC) such as yttria-stabilzed zirconia (YSZ) with a suitable composition can be applied by various methods (APS, EB-PVD).

### BRIEF DESCRIPTION OF DRAWINGS

Preferred embodiments of the invention are illustrated in the accompanying drawings, in which
- **Fig. 1**: shows a gas turbine blade and
- **Fig. 2**: one embodiment of a multi-layered-coating on the external surface of the article according to the present invention and

The drawings show only parts important for the invention.

### DETAILED DESCRIPTION OF INVENTION

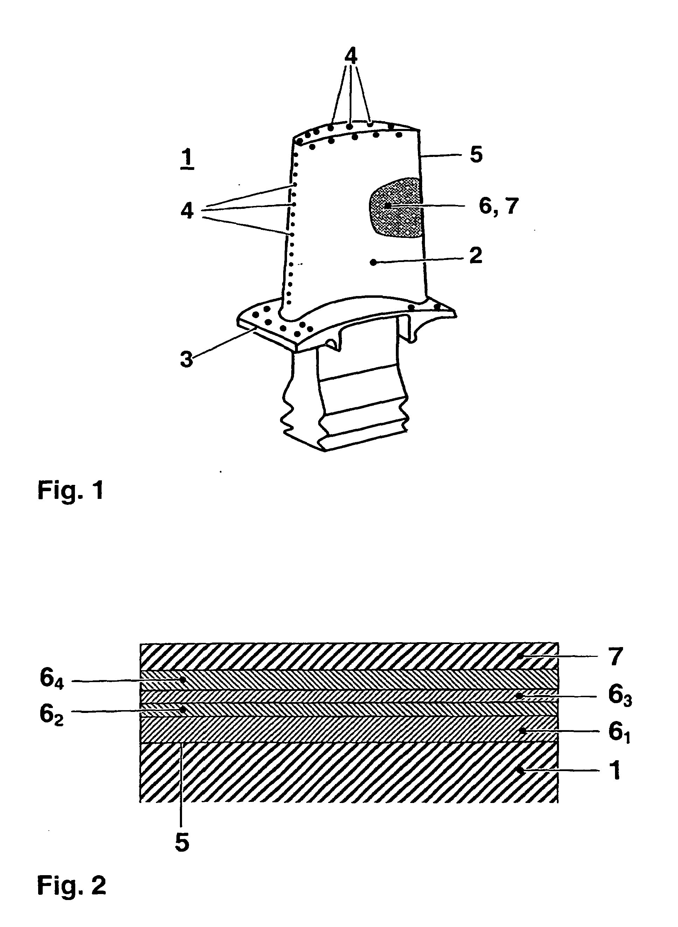

The present invention is generally applicable to components that operate within environments characterised by relatively high temperature, and are therefore subjected to severe thermal stresses and thermal cycling. Notable examples of such components include the high and low pressure vanes and blades, shrouds, combustor liners and augmentor hardware of gas turbine engines. Fig. 1 shows as an example such an article 1 as blades or vanes comprising a blade 2 against which hot combustion gases are directed during operation of the gas turbine engine, a cavity, not visible in Figure 1, and cooling holes 4, which are on the external surface 5 of the component 1 as well as on the platform 3 of the component. Through the cooling holes 4 cooling air is ducted during operation of the engine to cool the external surface 5. The external surface 5 is subjected to severe attack by oxidation, corrosion and erosion due to the hot combustion gases. In many cases the article 1 consists of a nickel or cobalt base super alloy such as disclosed, by way of an example, in US-A-5,759,301. In principle, the article 1 can be single crystal (SX), directionally solidified (DS) or polycrystalline. While the advantages of this invention is described with reference to a turbine blade or vane as shown in Fig. 1, the invention is generally applicable to any component on which a coating system may be used to protect the component from its environment.

As seen in Fig. 2 it is disclosed a method of depositing the layered coating on the external surface 5 of the article 1. The bond or overlay coating 6 on top of the external surface 5 of the article 1 consists of four different layers of MCrAlY, MCrAlSiY or MCrSi 6₁, 6₂, 6₃, 6₄. At least the first layer 6₁ consists of MCrAlY or MCrAlSiY. The first layer 6₁ is deposited in a thickness range of 10 to 100 µm, with a preferred thickness range of 25 to 50 µm. At least the outer layer 6₄ on top of all deposited layers 6₁, 6₂, 6₃, consists of MCrAlSi or MCrSi. This forms during operation chromia and or mixed scale containing chromia, alumina and silica. The outer layer 6₄ is deposited in a thickness range of 10 to 100 µm, with a preferred thickness range of 40 to 80 µm. The number of layers 6₁, 6₂, 6₃, 6₄ in Fig. 2 are only given as an example and could vary on the specific embodiment.

At least the outer layer 6₄ of all layers 6₁, 6₂, 6₃, 6₄ are deposited by an electroplated method. A lower thickness of that outer layer 6₄ is likely to produce the shorter crack and possibly a slower crack growth rate. The present invention consists of providing multiple interfaces in overlay or bond coating in order to reduce crack initiation and propagation. The interface in the structure provides hindrance to crack initiation and propagation, since cracks must re-initiate at the interface and then propagate through the coatings. On the other hand, the electroplated process can deposit a thin MCrAlY coating uniformly. The electroplated process is a viable process to apply a coating uniformly over a turbine blade and vane with a good control of coating thickness and there is no of line of sight limitation in the process. The process also deposits coatings without any excess of oxygen impurity known to be detrimental to fatigue resistance of coating.

The layers 6₂, 6₃ in between the first layer 6₁ and the outer most layer 6₄ can consists of MCrAlY, MCrSiAlY or MCrSi. As an example, the coating could consists of alternating layers 6₁, 6₂, 6₃ of two different materials, such as one layer consists of MCrAlY and the other layer consists of MCrAlSiY. The density of layers 6₂, 6₃ in mid section of all layer can be higher than in the interior or external areas of the coating layer 6₁, 6₄.

It is believed that in a multilayer coating system, thickness of the individual layers 6₁, 6₂, 6₃, 6₄ as well as the total thickness of the coating are important, because it is generally known that a thin coating is better in fatigue resistance than a thick coating. The coating layers 6₁, 6₂, 6₃, 6₄ are placed to provide interfaces for crack blunting formed by placement of the layers 6₁, 6₂, 6₃, 6₄. The thickness and composition of each layer 6₁, 6₂, 6₃, 6₄ can vary. In the disclosed invention the coating layers are suitably disposed in preference to chemical composition, modulas, thermal expansion coefficient, i.e. physical-mechanical and metallurgical properties. The layer spacing in the disclosed is contemplated as tens of micrometers and will be based on coating chemical activity and diffusional stability.

The present coating consists of an array of layers suitable arranged to reduce diffusion flux as well as to provide sufficient amount of aluminum and chromium on the surface to provide both oxidation and corrosion resistance at the operating temperature in the engine. The present coating forms during operation chromia and or mixed scale containing chromia, alumina and silica.

Here are give some examples of MCrAlY, MCrAlSiY and MCrSi coatings which could according to the present invention be used.

| MCrAlY | MCrAlSiY | MCrSi |
|---|---|---|
| Ni-23Co-18Cr-10AI-0.5Y | Ni-25Cr-5Al-1Ta-0,5Y-1.2Si | Ni-40Cr-5Si.0.5Y |
| Co-32Ni-30Cr-3Al-0.5Y | Ni-30Cr-3AI-4Si-0.5Y | Ni-30Cr-4Si-0.5Y |

The different MCrAIY layers 6₁, 6₂, 6₃, 6₄ can contain besides Y, reactive elements such as Hf, Zr, Si, Ru, and lanthanides alone or in combination.

The layers of MCrAIY-coating 6₁, 6₂, 6₃ can be applied e.g. by at least one of the coating methods of plasma spray, wire arc spray, high velocity oxy-fuel (HVOF), air plasma spray (APS), low pressure plasma spray (LPPS), vacuum plasma spray (VPS), electrolytic or galvanic deposition, Physical Vapour Deposition (PVD), Chemical Vapour Deposition (CVD), slurry or painting or paint spray or sol gel or any other suitable methods known in the prior art.

The deposition of the of the coating-layers 6 is following by a heat treatment of 1100ºC for 2 to 20 hours, e.g. at 1140ºC for 2 hours, in an inert atmosphere, such as argon, air, hydrogen or in a vacuum.

Before the deposition of the coating layers 6₁, 6₂, 6₃, 6₄ the external surface 5 of the article 1 and/or the outer layer 6₄ of the deposited layers 6₁, 6₂, 6₃, 6₄ can be aluminised.

On top of the applied layers as seen in Fig. 2 a layer 7 of a ceramic thermal barrier coating (TBC) such as yttria-stabilzed zirconia (YSZ), though other ceramic materials and other stabilizer could be used, such as zirconia stabilized by ceria (CeO₂), scandia (Sc₂O₃) or other oxides. The ceramic layer is deposited to a thickness that is sufficient to provide the required thermal protection for the underlying substrate, generally in the order of about 125 to 800 µm.

While our invention has been described by an example, it is apparent that other forms could be adopted by one skilled in the art. Accordingly, the scope of our invention is to be limited only by the attached claims.

### REFERENCE NUMBERS

- 1: Article
- 2: Blade
- 3: Platform
- 4: Cooling holes
- 5: External surface of article 1
- 6: Bond or overlay coating
- 6₁: Layer of MCrAlY or MCrSiAlY
- 6₂, 6₃: Layer of MCrAlY, MCrSiAlY or MCrSi
- 6₄: Layer of MCrSiAl or MCrSi
- 7: Layer of ceramic coating

## Claims

1. A method of depositing a coating system (6, 7) on top of the external surface (5) of an article (1) comprising the step of
- depositing at least a first layer (6₁) on the surface (5) of the article (1) consisting of MCrAlY or MCrAlSiY,
- depositing at least an outer layer (6₄) on top of all deposited layers (6₁, 6₂, 6₃) consisting of MCrAlSi or MCrSi, wherein
- at least the outer layer (6₄) of all layers (6₁, 6₂, 6₃, 6₄) is deposited by an electroplated method.

2. The method of depositing a coating according to claim 1, comprising the step of depositing a first layer (6₁) and/or an outer layer (6₄) in a thickness range of 10 to 100 µm.

3. The method of depositing a coating according to claim 1 or 2, comprising the step of depositing a first layer (6₁) in a thickness range of 25 to 50 µm.

4. The method of depositing a coating according to claim 1 or 2, comprising the step of depositing an outer layer (6₄) in a thickness range of 40 to 80 µm.

5. The method of depositing a coating according to any of the claims 1 to 4, comprising the step of depositing a number of layers (6₂, 6₃) consisting of MCrSi and/or MCrAISiY and/or MCrAlY between the first and the outer layer (6₁, 6₄).

6. The method of depositing a coating according to claim 5, comprising the step of depositing a density of layers in mid section of the layers (6₁, 6₂, 6₃, 6₄) which is higher than in the interior or external areas of the coating layer (6₁, 6₂, 6₃, 6₄).

7. The method of depositing a coating according to any of the claims 1 to 6, comprising the step of depositing on the external surface (5) of the article (1) alternating layers of two different materials.

8. The method of depositing a coating according to any of the claims 1 to 7, comprising the step of depositing alternating layers (6₁, 6₂, 6₃) consisting of Ni-23Co-18Cr-10Al-0.5 Y and Ni-25Cr-5Al-1Ta-0,5Y-1.2Si on the external surface (5) of the article (1) before depositing the outer layer (6₄) on top of all deposited layers (6₁, 6₂, 6₃).

9. The method of depositing a coating according to any of the claims 1 to 7, comprising the step of depositing as MCrAlY Co-32Ni-30Cr-3Al-0.5Y and/or as MCrAlSiY Ni-30Cr-3Al-4Si-0.5Y.

10. The method of depositing a coating according to any of the claims 1 to 9, comprising the step of aluminising the external surface (5) of the article (1) prior to depositing of layers (6₁, 6₂, 6₃, 6₄) of MCrAIY.

11. The method of depositing a coating according to any of the claims 1 to 9, comprising the step of aluminising the deposited layers (6₁, 6₂, 6₃, 6₄).

12. The method of depositing a coating according to any of the claims 1 to 11, wherein the deposited coating-layers (6₁, 6₂, 6₃, 6₄) are heat treated at a temperature in a range from 1000º to 1150ºC for 2 to 20 hours in air, argon, hydrogen or in a vacuum.

13. The method of depositing a coating according to claim 12, wherein deposited coating-layers (6₁, 6₂, 6₃, 6₄) are heat-treated at a temperature at 1140ºC for 2 hours.

14. The method of depositing a coating according to any of the claims 1 to 13, comprising the step of depositing a layer (7) of a ceramic thermal barrier coating (TBC) on top of said layers (6₁, 6₂, 6₃, 6₄) of MCrAlY or the aluminised layer.

15. The method of depositing a coating according to any of the claims 1 to 14, comprising the step of depositing the layers (6₁, 6₂, 6₃, 6₄) of MCrAlY by one or more of the following methods: electroplated process, a thermal spray processes, Physical Vapour Deposition (PVD), Chemical Vapour Deposition (CVD), High velocity oxy-fuel (HVOF), vacuum plasma spray (VPS), low pressure plasma spray (LPPS), air plasma spray (APS), slurry or painting or paint spray or sol gel.

16. The method of depositing a coating according to any of the preceding claims, comprising the step of depositing a coating on top of the external surface (5) of a single crystal (SX), directionally solidified (DS) article (1) or equiaxed article (1).

## Patentansprüche

1. Verfahren für das Auftragen eines Beschichtungssystems (6, 7) oben auf der Außenfläche (5) eines Gegenstands (1) umfassend den Schritt des
- Auftragens mindestens einer ersten Schicht (6₁) auf der Oberfläche (5) des Gegenstands (1), bestehend aus MCrAlY oder MCrAlSiY,
- Auftragens mindestens einer Außenschicht (6₄) oben auf allen aufgetragenen Schichten (6₁, 6₂, 6₃), die aus MCrAlSi oder MCrSi besteht, wobei
- mindestens die Außenschicht (6₄) aller Schichten (6₁, 6₂, 6₃, 6₄) durch ein Galvanisierverfahren aufgetragen wird.

2. Verfahren für das Auftragen einer Beschichtung nach Anspruch 1, umfassend den Schritt des Auftragens einer ersten Schicht (6₁) und/oder einer Außenschicht (6₄) in einer Dicke im Bereich von 10 bis 100 µm.

3. Verfahren für das Auftragen einer Beschichtung nach Anspruch 1 oder 2, umfassend den Schritt des Auftragens einer ersten Schicht (6₁) in einer Dicke im Bereich von 25 bis 50 µm.

4. Verfahren für das Auftragen einer Beschichtung nach Anspruch 1 oder 2, umfassend den Schritt des Auftragens einer Außenschicht (6₄) in einer Dicke im Bereich von 40 bis 80 µm.

5. Verfahren für das Auftragen einer Beschichtung nach einem der Ansprüche 1 bis 4, umfassend den Schritt des Auftragens einer Anzahl von Schichten (6₂, 6₃) bestehend aus MCrSi und/oder MCrAlSiY und/oder MCrAlY zwischen der ersten und der Außenschicht (6₁, 6₄).

6. Verfahren für das Auftragen einer Beschichtung nach Anspruch 5 umfassend den Schritt des Auftragens einer Dichte von Schichten im mittleren Abschnitt der Schichten (6₁, 6₂, 6₃, 6₄), die höher ist als in den Innen- oder Außenbereichen der Beschichtungsschicht (6₁, 6₂, 6₃, 6₄).

7. Verfahren für das Auftragen einer Beschichtung nach einem der Ansprüche 1 bis 6, umfassend den Schritt des Auftragens, auf der Außenfläche (5) des Gegenstands (1), von abwechselnden Schichten aus zwei verschiedenen Materialien.

8. Verfahren für das Auftragen einer Beschichtung nach einem der Ansprüche 1 bis 7, umfassend den Schritt des Auftragens von abwechselnden Schichten (6₁, 6₂, 6₃) bestehend aus Ni-23Co-18Cr-10Al-0,5Y und Ni-25Cr-5Al-1Ta-0,5Y-1,2Si auf der Außenfläche (5) des Gegenstands (1) vor dem Auftragen der Außenschicht (6₄) oben auf allen aufgetragenen Schichten (6₁, 6₂, 6₃).

9. Verfahren für das Auftragen einer Beschichtung nach einem der Ansprüche 1 bis 7, umfassend den Schritt des Auftragens von Co-32Ni-30Cr-3A1-0,5Y als MCrAlY und/oder von Ni-30Cr-3Al-4Si-0,5Y als MCrAlSiY.

10. Verfahren für das Auftragen einer Beschichtung nach einem der Ansprüche 1 bis 9, umfassend den Schritt des Aluminisierens der Außenfläche (5) des Gegenstands (1) vor Auftragen der Schichten (6₁, 6₂, 6₃, 6₄) von MCrAlY.

11. Verfahren für das Auftragen einer Beschichtung nach einem der Ansprüche 1 bis 9, umfassend den Schritt des Aluminisierens der aufgetragenen Schichten (6₁, 6₂, 6₃, 6₄) .

12. Verfahren für das Auftragen einer Beschichtung nach einem der Ansprüche 1 bis 11, wobei die aufgetragenen Beschichtungsschichten (6₁, 6₂, 6₃, 6₄) bei einer Temperatur im Bereich von 1000 °C bis 1150 °C 2 bis 20 Stunden in Luft, Argon, Wasserstoff oder in einem Vakuum wärmebehandelt werden.

13. Verfahren für das Auftragen einer Beschichtung nach Anspruch 12, wobei die aufgetragenen Beschichtungsschichten (6₁, 6₂, 6₃, 6₄) bei einer Temperatur von 1140 °C 2 Stunden wärmebehandelt werden.

14. Verfahren für das Auftragen einer Beschichtung nach einem der Ansprüche 1 bis 13, umfassend den Schritt des Auftragens einer Schicht (7) keramischen Wärmedämmschicht (TBC) oben auf den Schichten (6₁, 6₂, 6₃, 6₄) von MCrAlY oder der aluminisierten Schicht.

15. Verfahren für das Auftragen einer Beschichtung nach einem der Ansprüche 1 bis 14, umfassend den Schritt des Auftragens der Schichten (6₁, 6₂, 6₃) von MCrAlY durch eines oder mehrere der folgenden Verfahren: Galvanisieren, Wärmespritzverfahren, physikalisches Aufdampfen (PVD), chemisches Aufdampfen (CVD), Hochgeschwindigkeitsflammspritzen (HVOF), Vakuumplasmaspritzen (VPS), Niederdruckplasmaspritzen (LPPS), Luftplasmaspritzen (APS), Aufschlämmungs- oder Anstrichmittelspritzen oder Anstreichen oder Solgel.

16. Verfahren für das Auftragen einer Beschichtung nach einem der vorhergehenden Ansprüche umfassend den Schritt des Auftragens einer Beschichtung oben auf der Außenfläche (5) eines einkristallinen (SX), eines gerichtet erstarrten (DS) Gegenstands (1) oder gleichachsigen Gegenstands (1).

## Revendications

1. Procédé de dépôt d'un système de revêtement (6, 7) par dessus la surface externe (5) d'un article (1) comprenant l'étape
- de dépôt d'au moins une première couche (6₁) sur la surface (5) de l'article (1), constituée de MCrAlY ou de MCrAlSiY,
- de dépôt d'au moins une couche externe (6₄) par dessus toutes les couches déposées (6₁, 6₂, 6₃), constituée de MCrAlSi ou de MCrSi, où
- au moins la couche externe (6₄) de toutes les couches (6₁, 6₂, 6₃, 6₄) est déposée par un procédé d'électrodéposition.

2. Procédé de dépôt d'un revêtement selon la revendication 1, comprenant l'étape de dépôt d'une première couche (6₁) et/ou d'une couche externe (6₄) dans un domaine d'épaisseurs allant de 10 à 100 µm.

3. Procédé de dépôt d'un revêtement selon la revendication 1 ou 2, comprenant l'étape de dépôt d'une première couche (6₁) dans un domaine d'épaisseurs allant de 25 à 50 µm.

4. Procédé de dépôt d'un revêtement selon la revendication 1 ou 2, comprenant l'étape de dépôt d'une couche externe (6₄) dans un domaine d'épaisseurs allant de 40 à 80 µm.

5. Procédé de dépôt d'un revêtement selon l'une quelconque des revendications 1 à 4, comprenant l'étape de dépôt d'un certain nombre de couches (6₂, 6₃) constituées de MCrSi et/ou de MCrAlSiY et/ou de MCrAlY entre la première couche (6₁) et la couche externe (6₄).

6. Procédé de dépôt d'un revêtement selon la revendication 5, comprenant l'étape de dépôt d'une densité de couches dans la section médiane des couches (6₁, 6₂, 6₃, 6₄), qui est plus élevée que dans les zones intérieures ou extérieures de la couche de revêtement (6₁, 6₂, 6₃, 6₄) .

7. Procédé de dépôt d'un revêtement selon l'une quelconque des revendications 1 à 6, comprenant l'étape de dépôt, sur la surface externe (5) de l'article (1), de couches alternantes de deux matériaux différents.

8. Procédé de dépôt d'un revêtement selon l'une quelconque des revendications 1 à 7, comprenant l'étape de dépôt de couches alternantes (6₁, 6₂, 6₃), constituées de Ni-23Co-18Cr-10Al-0,5Y et de Ni-25Cr-5Al-1Ta-0,5Y-1,2Si sur la surface externe (5) de l'article (1) avant le dépôt de la couche externe (6₄) par dessus toutes les couches déposées (6₁, 6₂, 6₃).

9. Procédé de dépôt d'un revêtement selon l'une quelconque des revendications 1 à 7, comprenant l'étape de dépôt en tant que MCrAlY Co-32Ni-30Cr-3Al-0,5Y et/ou en tant que MCrAlSiY Ni-30Cr-3Al-4Si-0,5Y.

10. Procédé de dépôt d'un revêtement selon l'une quelconque des revendications 1 à 9, comprenant l'étape d'aluminiage de la surface externe (5) de l'article (1) avant le dépôt des couches (6₁, 6₂, 6₃, 6₄) de MCrAlY.

11. Procédé de dépôt d'un revêtement selon l'une quelconque des revendications 1 à 9, comprenant l'étape d'aluminiage des couches déposées (6₁, 6₂, 6₃, 6₄) .

12. Procédé de dépôt d'un revêtement selon l'une quelconque des revendications 1 à 11, dans lequel les couches de revêtement déposées (6₁, 6₂, 6₃, 6₄) sont soumises à un traitement thermique à une température dans un domaine allant de 1000°C à 1150°C pendant une période de 2 à 20 heures dans l'air, l'argon, l'hydrogène ou dans un vide.

13. Procédé de dépôt d'un revêtement selon la revendication 12, dans lequel les couches de revêtement déposées (6₁, 6₂, 6₃, 6₄) sont soumises à un traitement thermique à une température de 1140°C pendant 2 heures.

14. Procédé de dépôt d'un revêtement selon l'une quelconque des revendications 1 à 13, comprenant l'étape de dépôt d'une couche (7) d'un revêtement barrière thermique céramique (TBC) par dessus lesdites couches (6₁, 6₂, 6₃, 6₄) de MCrAlY ou la couche aluminisée.

15. Procédé de dépôt d'un revêtement selon l'une quelconque des revendications 1 à 14, comprenant l'étape de dépôt des couches (6₁, 6₂, 6₃) de MCrAlY par l'intermédiaire de l'un ou de plusieurs des procédés suivants: processus d'électrodéposition, processus de pulvérisation thermique, déposition physique à vapeur (PVD), dépôt chimique en phase vapeur (CVD), procédé oxy-combustible à haute vélocité (HVOF), pulvérisation au plasma sous vide (VPS), pulvérisation au plasma à basse pression (LPPS), pulvérisation au plasma à l'air (APS), suspension ou peinture ou pulvérisation de peinture ou sol gel.

16. Procédé de dépôt d'un revêtement selon l'une quelconque des revendications précédentes, comprenant l'étape de dépôt d'un revêtement par dessus la surface externe (5) d'un cristal unique (SX), d'un article solidifié de manière directionnelle (DS) (1) ou d'un article équiaxe (1).
